# FASCICULE DE BREVET EUROPEEN

(11) **EP 1 739 457 B1**
(45) Date de publication et mention de la délivrance du brevet: **01.02.2012**
(21) Numéro de dépôt: 06115538.8
(22) Date de dépôt: 15.06.2006
(51) Int. Cl.: G01T 1/20

(54) **Capteur d`images à résolution spatiale améliorée et procédé de réalisation du capteur**
Bildsensor mit verbesserter räumlicher Auflösung und Verfahren zur Herstellung des Sensors
Improved spatial resolution image sensor and implementation procedure for said sensor

(30) Priorité: 01.07.2005 FR 0507033
(43) Date de publication de la demande: 03.01.2007
(73) Titulaire: THALES, 92200 Neuilly sur Seine (FR)
(72) Inventeur: Gally, Daniel, 38870 Bressieux (FR); Berthier, Luc, 38000 Grenoble (FR)
(74) Mandataire: Brunelli, Gérald

(56) Documents cités:
- EP-A- 1 113 290
- US-A1- 2003 042 424
- US-A1- 2004 041 099

## Description

La présente invention concerne un capteur d'image. Elle concerne également un procédé de fabrication d'un tel capteur. L'invention trouve une utilité particulière dans le domaine de l'imagerie radiologique où les capteurs d'image comportent un scintillateur pour transformer un rayonnement sonde par exemple un rayonnement du domaine X ou Gamma, en rayonnement de détection généralement visible.

On connaît, dans le domaine des capteurs d'image, des capteurs électroniques de rayonnement X comportant des écrans intensificateurs d'image radiologique disposés en regard d'un détecteur et recevant un rayonnement X. Les détecteurs les plus communément utilisés sont, dans le domaine de la radiologie, des caméras avec cibles, des barrettes assemblées ou des matrices de dispositifs à transfert de charge (CCD), ou encore des matrices de détecteurs CMOS (Complementary Metal Oxide Semiconductor). Ces détecteurs sont peu efficaces pour détecter directement des rayons X, c'est la raison pour laquelle ils sont, pour cela, souvent associés avec des scintillateurs chargés de transformer les rayonnements du domaine X en des rayonnements dans le spectre de sensibilité du détecteur, par exemple dans le spectre visible.

Le matériau utilisé pour effectuer la transformation, c'est à dire le matériau du scintillateur, est souvent de l'oxysulfure de gadolinium. Celui-ci est utilisé sous forme d'un dépôt mince, typiquement de l'ordre de 50 à 300 micromètres. Ce dépôt est constitué de particules de ce matériau assemblées par un liant. L'émission de lumière visible dans toute l'épaisseur, et toutes les directions, de ce matériau entraîne une perte de pouvoir résolvant du détecteur et donc du capteur de rayonnements X.

L'iodure de césium, Csl, dopé au thallium, en aiguilles, offre une alternative intéressante pour un rendement lumineux supérieur associé à un effet de guide d'onde des aiguilles dont les dimensions typiques des sections vont de 3 à 6 micromètres. On connaît ainsi des réalisations dans lesquelles le scintillateur de l'écran d'entrée est constitué d'iodure de césium déposé par évaporation sous vide sur un substrat, l'évaporation pouvant avoir lieu sur un substrat froid ou chaud. Les aiguilles sont orientées perpendiculairement à la surface du substrat qui les porte. Elles ne sont jointes que partiellement les unes aux autres. Elles offrent ainsi une porosité de 20 à 25%. Ces pores, ou interstices, remplis d'air, associées à l'indice de réfraction favorable du Csl (1,78) apportent une canalisation des photons visibles émis dans chaque aiguille et donnent une sensibilité et un pouvoir résolvant plus élevé.

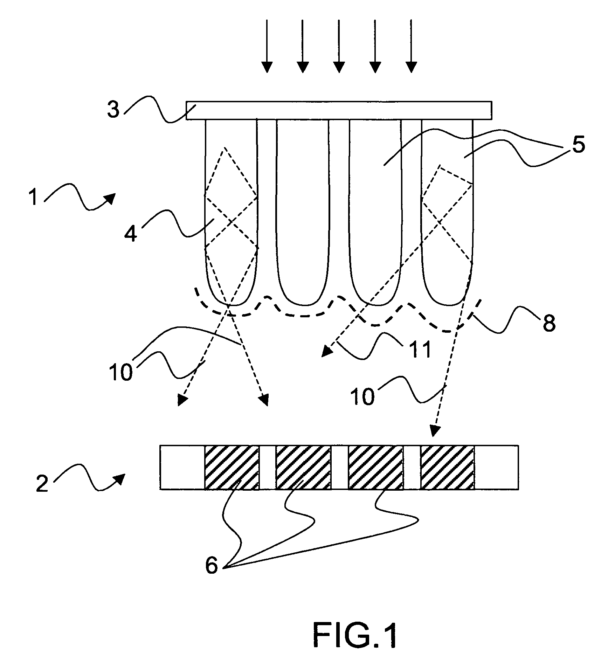

Sur la figure 1, on a représenté de façon schématique un capteur d'image radiologique comportant un scintillateur 1, et un détecteur, 2. Le scintillateur 1, comporte un substrat 3, par exemple en carbone, recouvert d'une couche d'un matériau luminescent 4, par exemple de l'iodure de césium, qui prend la forme d'aiguilles 5 (ou aspérités). Le détecteur 2, par exemple une barrette à dispositifs de transferts de charge, comporte des éléments sensibles 6 au rayonnement visible. L'épaisseur de la couche de matériau luminescent 4, est constante sur toute la surface du substrat.

Le substrat 3 reçoit un flux de photons X (rayonnement sonde) symbolisés par des flèches verticales en traits pleins. On a représenté en traits pointillés sur la figure, des exemples de trajets 10, 11 suivis dans les aiguilles 5, d'iodure de césium par le rayonnement visible correspondant aux photons X incidents. Le rayonnement visible (rayonnement de détection) émergeant du matériau luminescent 4, illumine le détecteur 2. Les trajets normaux 10, ont une direction sensiblement parallèle à celle des photons X, ils émergent du scintillateur par les extrémité des aiguilles 5, en iodure de césium. Il y a également diffusion latéralement du rayonnement visible véhiculé dans les aiguilles 5, d'iodure de césium comme cela est indiqué sur la figure par la référence 11.

On définit le rendement lumineux du scintillateur comme le rapport entre l'énergie du rayonnement sonde incident sur le scintillateur et l'énergie du rayonnement de détection émis par le scintillateur.

La résolution spatiale du capteur d'image radiologique dépend de la capacité des aiguilles 5, d'iodure de césium à bien canaliser le rayonnement visible. Cette capacité est fonction de l'épaisseur de la couche matériau luminescent 4. Une augmentation d'épaisseur de la couche matériau luminescent 4, entraîne une détérioration de la résolution spatiale du capteur d'image radiologique.

Par ailleurs, lorsque les éléments sensibles 6 du détecteur 2 sont illuminés par un rayonnement visible, les éléments sensibles 6 créent des électrons qu'ils stockent temporairement en leur sein, afin qu'ils soient convertis en image électrique hors du détecteur. Les éléments sensibles 6 ont une capacité de stockage des électrons qui peut être dans certains cas, inférieure au nombre d'électrons engendrés par un rayonnement visible émis localement par le scintillateur 1. Pour éviter des saturations locales des électrons stockés qui entraînent des saturations sur l'image électrique, on peut être conduit soit à modifier le spectre du rayonnement visible arrivant sur le détecteur 2, soit encore à atténuer l'énergie du rayonnement visible émis par le matériau luminescent 4, ce qui revient à diminuer le rendement lumineux du scintillateur.

L'invention trouve son avantage lorsque il faut réduire le niveau de rayonnement visible émis par le scintillateur 1 pour l'adapter à la capacité de stockage des éléments sensibles 6, du détecteur 2, et améliorer dans le même temps la résolution spatiale du capteur d'image.

Une solution connue pour réduire le niveau de rayonnement visible émis par le scintillateur 1, consiste à recouvrir le matériau luminescent, 4 d'un filtre 8, constitué par un film métallique très fin. Toutefois, l'élaboration du filtre 8, est coûteuse, et la durée du procédé d'application longue. Ce procédé est, de plus, délicat à mettre au point pour obtenir une faible atténuation du rayonnement de détection, homogène sur toute la surface de scintillateur 1. Par ailleurs, l'application d'un filtre 8, sur le scintillateur 1, n'améliore pas la résolution spatiale du capteur de rayonnement X.

Un but important de l'invention est donc de résoudre le problème posé par l'adaptation de l'énergie du rayonnement visible arrivant sur le détecteur et de l'amélioration de la résolution spatiale du capteur d'image.

Pour atteindre ce but, l'invention propose un capteur d'image selon la revendication 1.

L'invention a aussi pour objet un procédé de fabrication d'un capteur d'image selon la revendication 11.

Par rapport à l'état de l'art présenté plus haut, l'invention présente un double avantage :
- un gain en résolution spatiale;
- une simplicité du procédé d'application.

Le gain en résolution spatiale est très sensible : par exemple, l'augmentation de la valeur de la fonction de transfert de modulation peut être de l'ordre de 30% à la fréquence spatiale de 8 paires de lignes par millimètres). L'uniformité de l'atténuation du rendement lumineux sur la surface du scintillateur convient à l'application et enfin la reproductibilité du procédé est un atout pour la production en grande série des scintillateurs ;

La simplicité du procédé d'application induit un faible coût en investissement matériel, une durée d'application réduite et un risque de panne des équipements d'application beaucoup plus faible que ceux nécessaires à la mise en oeuvre de technique de dépôt sous vide, par exemple.

D'autres caractéristiques et avantages de l'invention apparaîtront à la lecture de la description détaillée qui suit, faite à titre d'exemple et en référence aux dessins annexés dans lesquels :
- la figure 1, déjà décrite, montre un capteur d'image selon l'art antérieur, les images étant formée à partir d'un rayonnement sonde;
- la figure 2, montre un capteur d'image selon l'invention, comportant un scintillateur;
- la figure 3 représente, en coupe, une deuxième réalisation d'un capteur d'image selon l'invention ;
- la figure 4 représente deux courbes montrant l'amélioration de la fonction de transfert de modulation (FTM) apportée par l'invention ;
- la figure 5 représente un dispositif permettant une mise en oeuvre du procédé de réalisation d'un capteur d'image selon l'invention et notamment d'un scintillateur équipant le capteur d'image.

Pour faciliter la lecture de la description, les mêmes repères désigneront les mêmes éléments dans les différentes figures.

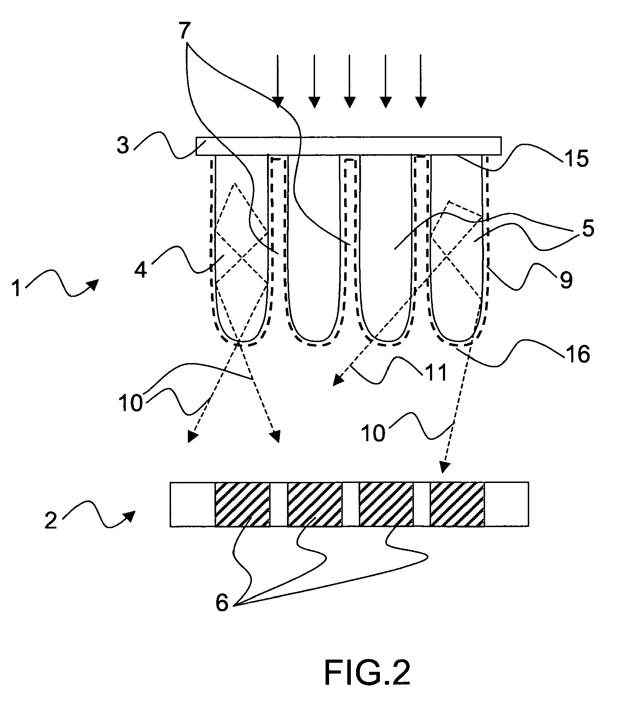

La figure 2 représente schématiquement un capteur d'image selon l'invention, l'image étant formée a partir d'un rayonnement sonde, comportant un scintillateur 1 d'écran d'entrée de capteur de rayonnement.

Le scintillateur 1, comporte un substrat 3, dont une des faces est recouverte d'une couche d'un matériau luminescent 4. La couche de matériau luminescent 4, est sensiblement parallèle au substrat 3. Une première face 15, de la couche matériau luminescent 4, est en contact avec le substrat 3. Une deuxième face 16, de la couche de matériau luminescent 4, a une structure surfacique de type colonnaire, pouvant être issue des techniques d'évaporation sous vide. La deuxième face 16, comporte sur sa surface un très grand nombre d'aspérités 5, prenant par exemple la forme d'aiguilles. Chacune des aiguilles 5, possède une première extrémité en contact avec le substrat 3 et une deuxième extrémité. Les deuxièmes extrémités des aiguilles 5, constituent les aspérités 5, de la deuxième face 16, de la couche de matériau luminescent 4.

Les aspérités composant la deuxième face de la couche de matériau luminescent 4, sont séparées par des interstices 7. Le diamètre des interstices constitue une de leur dimension caractéristique. Le diamètre moyen des interstices 7, est inférieur au diamètre moyen des aspérités 5, autrement dit, le matériau luminescent 4, a une compacité inférieure à l'unité. Par exemple, la compacité du matériau luminescent 4 a une valeur comprise entre 0,4 et 0,9.

Lorsque un rayonnement sonde pénètre dans la couche de matériau luminescent 4, en traversant le substrat 3, le matériau luminescent 4, produit un rayonnement de détection 10, 11 qui émerge de la couche de matériau luminescent 4 préférentiellement par les deuxièmes extrémités des aiguilles 5.

Le rayonnement sonde est, par exemple, de type rayonnement X ou Gamma et le rayonnement de détection est, par exemple, de type rayonnement visible.

Le scintillateur 1, représenté sur la figure 2, se distingue de celui représenté sur la figure 1 par le fait que le filtre 8 est remplacé par un matériau d'enrobage 9. Le matériau d'enrobage 9 épouse au plus près les aspérités 5, de la couche de matériau luminescent 4.

En particulier, la totalité de la structure surfacique de type colonnaire (aiguille ou grain de poudre), est recouverte d'une pellicule du matériau d'enrobage 9.

Le rayonnement de détection qui porte, sur les figures 1 et 2, la référence 10, a une direction proche de celle du rayonnement sonde incident sur le substrat, il transporte un signal de détection aux deuxièmes extrémités des aiguilles 5. A l'inverse, le rayonnement de détection qui porte, sur les figures 1 et 2, la référence 11, prend des directions très différentes de celles du rayonnement sonde et n'émerge pas de la couche de matériau luminescent 4, par les deuxièmes extrémités des aiguilles 5, on parlera dans la suite de rayonnement oblique. L'existence d'un rayonnement de détection 11, dégrade la résolution spatiale du capteur d'images radiologiques.

Sur la figure 2, le rayonnement de détection 10, traverse une seule fois la pellicule de matériau d'enrobage 9. La nature oblique des trajets du rayonnement de détection 11, oblige le rayonnement de détection 11 à traverser plusieurs fois la pellicule de matériau d'enrobage 9, avant d'arriver sur les éléments sensibles 6, du détecteur 2. Lorsque la pellicule de matériau d'enrobage 9, possède la propriété d'absorber partiellement le rayonnement de détection, l'énergie du rayonnement 11, émergeant du matériau luminescent 4, est notablement plus atténuée que celle du rayonnement 10, ce qui profite à la résolution spatiale du capteur d'image radiologique.

Sur la figure 2, le trajet du rayonnement de détection 11 représenté traverse trois fois la pellicule de matériau d'enrobage. Par exemple, si la pellicule de matériau d'enrobage 9, absorbe 50% du rayonnement de détection à chaque traversée, le rayonnement de détection 10, est atténué de τ₁ = 50% à son arrivée sur le détecteur 2, et le rayonnement oblique 11 est atténué de τ₂ = 1 - τ₁xτ₁xτ₁= 87,5%à son arrivée sur le détecteur 2.

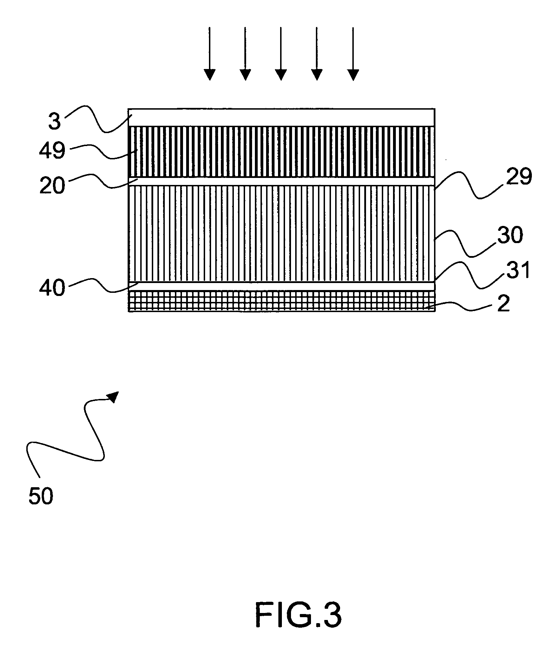

La figure 3 représente schématiquement, en coupe, une deuxième réalisation d'un capteur d'image selon l'invention comportant un scintillateur 1 et pouvant être employé pour des examens radiologiques, par exemple des mammographies.

Le capteur d'image 50, possède une structure stratifiée. La strate supérieure se compose du substrat 3, par exemple en carbone, qui reçoit un rayonnement sonde sur une première face. Sur une deuxième face du substrat, on dépose, par exemple par dépôt sous vide, une couche 49 comportant un matériau luminescent dont l'état de surface comporte des aspérités, recouvert d'une pellicule d'un matériau d'enrobage absorbant partiellement le rayonnement de détection et épousant très étroitement la structure de la surface du matériau luminescent. Une face de cette couche 49, est couplée par collage à une première extrémité 29 d'un faisceau de fibres optiques 30, pouvant transporter un rayonnement de détection. Une deuxième extrémité 31, du faisceau de fibre optique est fixée également par collage à un détecteur de rayonnement de détection 2, par exemple une barrette de dispositif à transfert de charge.

Lorsque la couche de matériau luminescent 4, est illuminée par un rayonnement sonde au travers du substrat 3, la couche de matériau luminescent 4, produit un rayonnement de détection 10, 11. Le rayonnement de détection 10, 11, qui émerge du matériau luminescent traverse la pellicule de matériau d'enrobage 9, et une fine épaisseur de colle 20, pour pénétrer dans le faisceau de fibres optique 30. A la sortie du faisceau de fibres optiques, le rayonnement de détection 10, 11, traverse une autre épaisseur de colle 40, avant d'attaquer les éléments sensibles 6 du détecteur 2 qui délivre une image électrique.

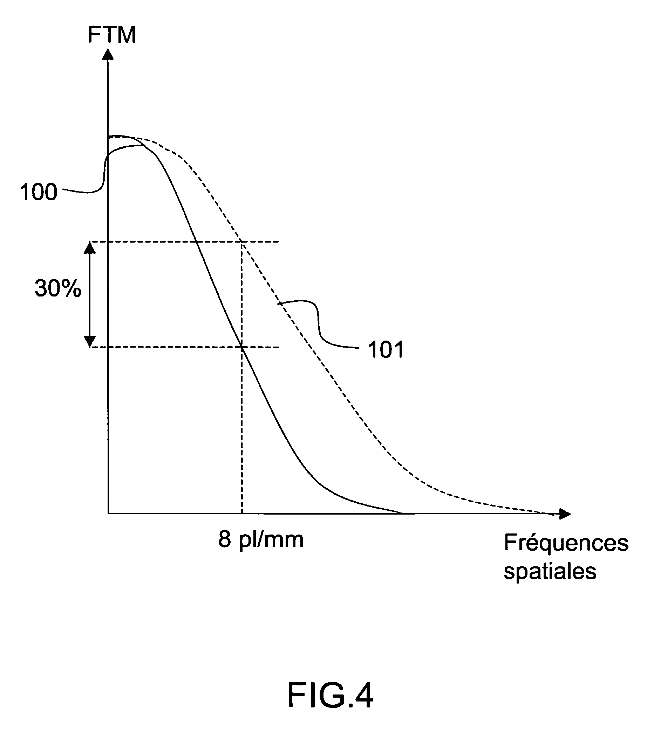

Sur la figure 4 les courbes 100, et 101, montrent en fonction de la fréquence spatiale, que la fonction de transfert de modulation (FTM) est plus élevée dans le cas du capteur d'image selon l'invention , courbe 101, que dans le cas d'un capteur d'image selon l'état antérieur, courbe 100. Par exemple le gain de modulation à une fréquence spatiale de 8 paires de lignes par millimètre (pl/mm) atteint 30% alors que l'atténuation de l'énergie du rayonnement de détection arrivant sur le détecteur, causée sur le rayonnement sonde 10, par la pellicule de matériau d'enrobage 9, vaut τ₁= 50%.

Pour réaliser un scintillateur 1 équipant un capteur d'image selon l'invention, on immerge le scintillateur 1 comportant un substrat 3, recouvert sur une face, d'un matériau luminescent 4, dans une solution d'enrobage comportant du matériau d'enrobage 9, et un solvant. L'immersion du scintillateur 1, pendant une durée brève permet la diffusion du matériau d'enrobage 9, dans les aspérités de la deuxième face de la couche de matériau luminescent 4.

Dans une réalisation du capteur d'image selon l'invention, le matériau d'enrobage 9 du scintillateur 1, comporte un colorant organique.

Dans une autre réalisation du capteur d'image selon l'invention, le matériau d'enrobage 9 du scintillateur 1, comporte un colorant minéral finement divisé, et le matériau d'enrobage 9 possède une granulométrie inférieure au diamètre moyen des interstices 7, qui lui permet d'enrober étroitement la surface des aspérités 5, constituant la structure surfacique de sa deuxième face 16.

Dans une réalisation du capteur d'image selon l'invention, le matériau luminescent 4, du scintillateur 1, comporte un sel alcalin et le matériau d'enrobage 9, comporte le colorant portant la référence de la société ALDRICH, basée aux Etats-Unis d'Amérique, CAT 19966-4 mélangé à du cyclohexane à la concentration de deux grammes par litre de cyclohexane.

On extrait ensuite lentement le scintillateur 1, de la solution d'enrobage pour éviter la formation de traces et on met à sécher le scintillateur 1. Une fois sec, le matériau d'enrobage 9, se répartit en une fine pellicule sur la surface des aspérités 5, de la couche du matériau luminescent 4.

L'épaisseur moyenne de la pellicule de matériau d'enrobage est inférieure à dix nanomètres.

L'énergie superficielle d'un liquide, également appelée tension superficielle, caractérise l'aptitude qu'a la surface d'un liquide à prendre la plus petite valeur possible dans un milieu donné. Elle caractérise également la cohésion d'un liquide puisqu'il faut vaincre les forces de cohésion interne de celui-ci pour accroître cette surface. Mécaniquement, elle s'exprime comme une force s'opposant à un accroissement de surface et rapportée à l'unité de longueur. L'unité utilisée est le N/m

La pellicule de matériau d'enrobage 9, est déposée sur la deuxième face 16, de la couche de matériau luminescent 4, en au moins une opération, l'opération comportant une première étape d'immersion lente de la couche de matériau luminescent 4, dans une solution d'enrobage comportant un solvant inerte par rapport au matériau du substrat 3, et au matériau luminescent 4, et le matériau d'enrobage 9, la solution d'enrobage ayant une faible énergie superficielle, suivie d'une deuxième étape d'évaporation du solvant en phase de vapeur sèche.

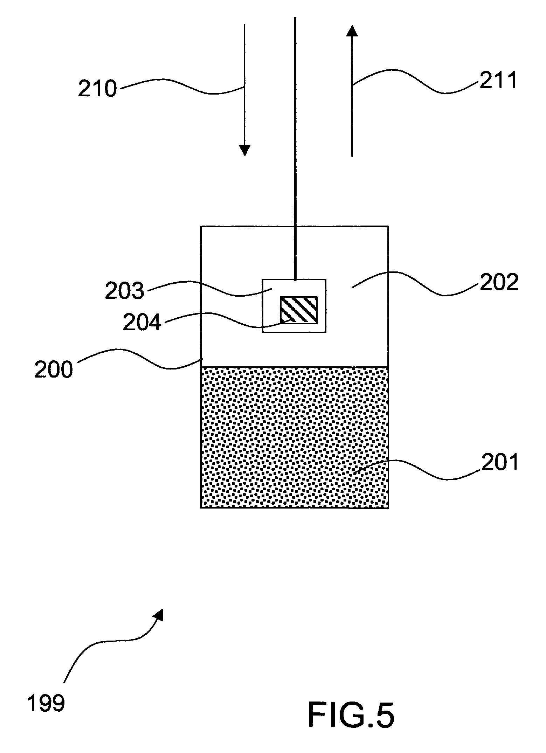

La figure 5 représente sous forme schématique un dispositif 199 permettant de réaliser un scintillateur 1 équipant un capteur d'image selon l'invention. Le dispositif 199 comporte :
- un échantillon, 204 ;
- une cuve 200 ;
- une platine 203 porte-échantillon.

L'échantillon 204, est constitué par un substrat dont une des faces est recouverte d'une couche de matériau luminescent 4.

La cuve 200, conformée pour que l'échantillon puisse être introduit dans la cuve, est remplie jusqu'à mi-hauteur d'une solution d'enrobage. La solution d'enrobage pouvant être un produit colorant mélangé à un solvant. La quantité de solution d'enrobage placée dans la cuve est choisie pour que la profondeur du solution d'enrobage 201 soit suffisante pour immerger totalement l'échantillon 204, dans la solution d'enrobage. Une partie inférieure de la cuve comporte la solution d'enrobage, une partie supérieure de la cuve constitue une zone de séchage en vapeur sèche 202.

La platine 203 porte-échantillon supportant l'échantillon 204. Les contacts entre l'échantillon 204 et le porte-échantillon 203 sont très réduits. La platine 203 peut s'animer d'un mouvement vertical de translation lente. Dans un mouvement descendant 210, lent, la platine 203 permet d'immerger progressivement l'échantillon 204, dans la solution d'enrobage pour obtenir une bonne homogénéité de coloration. Après une courte immersion de l'échantillon 204, la platine 203 dans un mouvement ascendant 211, fait passer lentement l'échantillon 204, de la partie inférieure de la cuve à la partie supérieure de la cuve. De cette façon, on évite toute rétention de solvant sur la surface de l'échantillon 204, et son élimination est très uniforme. La durée de l'immersion de l'échantillon 204 dans la solution d'enrobage, de l'ordre de quelques minutes, détermine la valeur de l'atténuation du rayonnement de détection et donc détermine la valeur du rendement lumineux du scintillateur 1. L'adaptation du rendement lumineux à la valeur souhaitée peut être obtenue par des diminutions successives obtenues par itération d'une opération comportant successivement une étape d'immersion dans la solution d'enrobage et une étape de séchage.

Dans une solution vraie, un matériau est dissout dans un solvant et se divise dans tout le solvant, formant avec lui une phase homogène. Entre autres propriétés caractéristiques, une telle solution traverse les filtres les plus fins sans séparation. La taille des particules dissoutes (molécules ou ions) va de 0,1 à quelques nanomètres.

Dans un mode de réalisation du procédé de fabrication du scintillateur 1 équipant un capteur d'image selon l'invention, le matériau d'enrobage 9, se comporte comme solution vraie dans le solvant.

Dans un mode de réalisation du procédé de fabrication du scintillateur 1 selon l'invention, où le matériau d'enrobage est déposé sous forme de poudre, le matériau d'enrobage 9, finement divisé, se comporte comme solution stable dans le solvant.

Dans un autre mode de réalisation du procédé de fabrication du scintillateur 1, selon l'invention, le solvant comporte du cyclohexane.

## Revendications

1. Capteur d'image comportant un scintillateur (1) d'écran d'entrée comprenant un substrat (3) partiellement recouvert d'aiguilles (5) constituées d'un matériau luminescent (4), les aiguilles (5) comportant une base en contact avec le substrat et un sommet, les aiguilles (5) étant séparées par des interstices (7), un rayonnement de détection émergeant de la surface des aiguilles (5) lorsque la base des aiguilles (5) est illuminé par un rayonnement sonde au travers du substrat (3), **caractérisé en ce que** la surface des aiguilles est recouverte de la base jusqu'au sommet, d'une pellicule d'un matériau d'enrobage (9) absorbant partiellement le rayonnement de détection.

2. Capteur d'image selon la revendication 1, **caractérisé en ce qu'**une couche constituée par des aiguilles du scintillateur (1) possède une structure de type colonnaire.

3. Capteur d'image selon l'une des revendications 1 à 2, **caractérisé en ce que** le rayonnement sonde est de type rayonnement X.

4. Capteur d'image selon l'une des revendications 1 à 2, **caractérisé en ce que** le rayonnement sonde est de type rayonnement Gamma.

5. Capteur d'image selon l'une des revendications 1 à 4, **caractérisé en ce que** le rayonnement de détection est de type rayonnement visible.

6. Capteur d'image selon l'une des revendications 1 à 5, **caractérisé en ce que** le matériau luminescent (4) est de l'iodure de césium dopé au thallium.

7. Capteur d'image selon l'une des revendications 1 à 6, l'épaisseur moyenne de la pellicule de matériau d'enrobage (9) du scintillateur (1) étant inférieure à dix nanomètres.

8. capteur d'image selon l'une des revendications 1 à 7, **caractérisé en ce que** le matériau d'enrobage (9) du scintillateur (1) comporte un colorant organique.

9. Capteur d'image selon l'une des revendications 1 à 7, **caractérisé en ce que** le matériau d'enrobage (9) du scintillateur (1) comporte un colorant minéral finement divisé, et **en ce que** le matériau d'enrobage (9) possède une granulométrie inférieure au diamètre moyen des interstices (7), qui lui permet d'enrober étroitement la surface des aiguilles (5).

10. Capteur d'image selon la revendication 8 **caractérisé en ce que** le matériau luminescent (4) du scintillateur (1) comporte un sel alcalin et **en ce que** le matériau d'enrobage (9) comporte le colorant portant la référence de la société ALDRICH basée aux Etats-Unis d'Amérique, CAT 19966-4.

11. Procédé de fabrication d'un capteur d'image selon l'une des revendications précédentes, **caractérisé en ce que** la pellicule de matériau d'enrobage (9) est déposée sur la surface des aiguilles (5) en au moins une opération, l'opération comportant une première étape d'immersion lente de la couche de matériau luminescent (4) dans une solution d'enrobage comportant un solvant inerte par rapport au matériau du substrat (3), au matériau luminescent (4), et le matériau d'enrobage (9), la solution d'enrobage ayant une énergie superficielle telle que le matériau d'enrobage (9) épouse au plus près les aspérités (5), de la couche de matériau luminescent (4), suivie d'une deuxième étape d'évaporation du solvant dans une zone de séchage en vapeur sèche (202).

12. Procédé de fabrication d'un capteur d'image selon la revendication 11, **caractérisé en ce que** le matériau d'enrobage (9), se comporte comme solution vraie dans le solvant.

13. Procédé de fabrication d'un capteur d'image selon la revendication 11, **caractérisé en ce que** le matériau d'enrobage (9), finement divisé, se comporte comme solution stable dans le solvant.

14. Procédé de fabrication d'un capteur d'image selon la revendication 11, **caractérisé en ce que** le solvant comporte du cyclohexane.

## Claims

1. An image sensor comprising an input screen scintillator (1) including a substrate (3) that is partially covered with needles (5) constituted by a luminescent material (4), the needles (5) comprising a base in contact with the substrate and a vertex, said needles (5) being separated by gaps (7), with detection radiation emerging from the surface of the needles (5) when the base of the needles (5) is illuminated by probe radiation through the substrate (3), **characterised in that** the surface of the needles is covered from the base to the vertex with a film of a coating material (9) that partially absorbs the detection radiation.

2. The image sensor according to claim 1, **characterised in that** a layer constituted by the needles of the scintillator (1) has a column type structure.

3. The image sensor according to any one of claims 1 to 2, **characterised in that** the probe radiation is of the X-ray type.

4. The image sensor according to any one of claims 1 to 2, **characterised in that** the probe radiation is of the Gamma ray type.

5. The image sensor according to any one of claims 1 to 4, **characterised in that** the detection radiation is of the visible radiation type.

6. The image sensor according to any one of claims 1 to 5, **characterised in that** the luminescent material (4) is thallium doped cesium iodide.

7. The image sensor according to any one of claims 1 to 6, the average thickness of the film of coating material (9) of the scintillator (1) being less than ten nanometres.

8. The image sensor according to any one of claims 1 to 7, **characterised in that** the coating material (9) of the scintillator (1) comprises an organic colouring.

9. The image sensor according to any one of claims 1 to 7, **characterised in that** the coating material (9) of the scintillator (1) comprises a finely divided mineral colouring, and **in that** the coating material (9) has granulometry that is less than the average diameter of the gaps (7) which allows it to densely coat the surface of the needles (5).

10. The image sensor according to claim 8, **characterised in that** the luminescent material (4) of the scintillator (1) comprises an alkaline salt and **in that** the coating material (9) comprises colouring with reference CAT 19966-4 from the ALDRICH company based in the United States of America.

11. A method for producing an image sensor according to any one of the preceding claims, **characterised in that** the film of coating material (9) is deposited onto the surface of the needles (5) in at least one operation, said operation comprising a first step of slowly immersing the layer of luminescent material (4) in a coating solution comprising a solvent that is inert relative to the material of the substrate (3), to the luminescent material (4) and the coating material (9), said coating solution having superficial energy such that the coating material (9) clings to the asperities (5)of the layer of luminescent material (4) as closely as possible, followed by a second step of evaporating the solvent in a dry steam (202) drying area.

12. The method for producing an image sensor according to claim 11, **characterised in that** the coating material (9) behaves like a true solution in the solvent.

13. The method for producing an image sensor according to claim 11, **characterised in that** the finely divided coating material (9) behaves like a stable solution in the solvent.

14. The method for producing an image sensor according to claim 11, **characterised in that** the solvent comprises cyclohexane.

## Patentansprüche

1. Bildsensor, der einen Eingangsschirmszintillator (1) umfasst, der ein teilweise von aus einem lumineszenten Material (4) gebildeten Nadeln (5) bedecktes Substrat (3) umfasst, wobei die Nadeln (5) eine Basis in Kontakt mit dem Substrat und eine Spitze umfassen, wobei die Nadeln (5) durch Lücken (7) getrennt sind, wobei eine Detektionsstrahlung von der Oberfläche der Nadeln (5) austritt, wenn die Basis der Nadeln (5) durch das Substrat (3) mit einer Sondenstrahlung beleuchtet wird, **dadurch gekennzeichnet, dass** die Oberfläche der Nadeln von der Basis bis zur Spitze mit einem Film aus einem Hüllmaterial (9) überzogen ist, das die Detektionsstrahlung teilweise absorbiert.

2. Bildsensor nach Anspruch 1, **dadurch gekennzeichnet, dass** eine von den Nadeln des Szintillators (1) gebildete Schicht eine säulenartige Struktur hat.

3. Bildsensor nach einem der Ansprüche 1 bis 2, **dadurch gekennzeichnet, dass** die Sondenstrahlung vom Röntgenstrahlungstyp ist.

4. Bildsensor nach einem der Ansprüche 1 bis 2, **dadurch gekennzeichnet, dass** die Sondenstrahlung vom Gammastrahlungstyp ist.

5. Bildsensor nach einem der Ansprüche 1 bis 4, **dadurch gekennzeichnet, dass** die Detektionsstrahlung vom sichtbaren Strahlungstyp ist.

6. Bildsensor nach einem der Ansprüche 1 bis 5, **dadurch gekennzeichnet, dass** das lumineszente Material (4) mit Thallium dotiertes Cäsiumiodid ist.

7. Bildsensor nach einem der Ansprüche 1 bis 6, wobei die mittlere Dicke des Films aus Hüllmaterial (9) des Szintillators (1) weniger als 10 Nanometer beträgt.

8. Bildsensor nach einem der Ansprüche 1 bis 7, **dadurch gekennzeichnet, dass** das Hüllmaterial (9) des Szintillators (1) ein organisches Färbungsmittel umfasst.

9. Bildsensor nach einem der Ansprüche 1 bis 7, **dadurch gekennzeichnet, dass** das Hüllmaterial (9) des Szintillators (1) ein fein verteiltes mineralisches Färbungsmittel umfasst, und **dadurch**, dass das Hüllmaterial (9) eine Kömchengröße hat, die kleiner ist als der mittlere Durchmesser der Lücken (7), so dass die Oberfläche der Nadeln (5) dicht überzogen wird.

10. Bildsensor nach Anspruch 8, **dadurch gekennzeichnet, dass** das lumineszente Material (4) des Szintillators (1) ein alkalisches Salz umfasst, und **dadurch**, dass das Hüllmaterial (9) das Färbungsmittel mit der Bezugsnummer CAT 19966-4 der Firma ALDRICH aus den USA umfasst.

11. Verfahren zur Herstellung eines Bildsensors nach einem der vorherigen Ansprüche, **dadurch gekennzeichnet, dass** der Film aus Hüllmaterial (9) in wenigstens einer Operation auf die Oberfläche der Nadeln (5) aufgebracht wird, wobei die Operation einen ersten Schritt des langsamen Eintauchens der lumineszenten Materialschicht (4) in eine Hülllösung umfasst, die ein in Bezug auf das Material des Substrats (3), das lumineszente Material (4) und das Hüllmaterial (9) inertes Lösungsmittel beinhaltet, wobei die Hülllösung eine solche Oberflächenenergie hat, dass sich das Hüllmaterial (9) so eng wie möglich an die Unebenheiten (5) der lumineszenten Materialschicht (4) schmiegt, gefolgt von einem zweiten Schritt des Verdampfens des Lösungsmittels in einer Trockendampf-Trocknungszone (202).

12. Verfahren zur Herstellung eines Bildsensors nach Anspruch 11, **dadurch gekennzeichnet, dass** sich das Hüllmaterial (9) wie eine echte Lösung in dem Lösungsmittel verhält.

13. Verfahren zur Herstellung eines Bildsensors nach Anspruch 11, **dadurch gekennzeichnet, dass** sich das Hüllmaterial (9) fein verteilt wie eine stabile Lösung in dem Lösungsmittel verhält.

14. Verfahren zur Herstellung eines Bildsensors nach Anspruch 11, **dadurch gekennzeichnet, dass** das Lösungsmittel Cyclohexan enthält.
